# EUROPEAN PATENT SPECIFICATION

(11) **EP 1 012 743 B1**
(45) Date of publication and mention of the grant of the patent: **02.11.2006**
(21) Application number: 97941684.9
(22) Date of filing: 17.09.1997
(51) Int. Cl.: G06F 17/00, G01C 21/20

(54) **METHOD OF PROVIDING A TEXTUAL DESCRIPTION OF A REMOTE VEHICLE LOCATION**
VERFAHREN ZUM BEREITSTELLEN VON TEXTUALER BESCHREIBUNG EINER ENTFERNTEN FAHRZEUGPOSITION
PROCEDE DE DESCRIPTION TEXTUELLE DE LA POSITION D'UN VEHICULE DISTANT

(43) Date of publication of application: 28.06.2000
(73) Proprietor: Magellan Dis Inc., Rochester Hills, MI 48309 (US)
(72) Inventor: PIWOWARSKI, Jim, Holly, MI 48442 (US); MALINOWSKI, Mark, Farmington Hills, MI 48334 (US)
(74) Representative: Shanks, Andrew
(86) International application number: PCT/US1997/016550
(87) International publication number: WO 1999/014700

(56) References cited:
- US-A- 5 155 688
- US-A- 5 208 756
- US-A- 5 293 163
- US-A- 5 428 546
- US-A- 5 485 161
- US-A- 5 508 931
- US-A- 5 539 397
- US-A- 5 572 204
- US-A- 5 625 668
- US-A- 5 627 549
- US-A- 5 638 279
- DINGUS T A: "HUMAN FACTORS ENGINEERING THE TRAVTEK DRIVER INTERFACE" PROCEEDINGS OF THE VEHICLE NAVIGATION AND INFORMATION SYSTEMS CONFERENCE. DEARBORN, OCT. 20 - 23, 1991, NEW YORK, IEEE, US, vol. 2, 20 October 1991 (1991-10-20), pages 749-755, XP000357146 ISBN: 0-7803-0488-8
- PATENT ABSTRACTS OF JAPAN vol. 018, no. 649 (P-1840), 9 December 1994 (1994-12-09) -& JP 06 251292 A (ZEXEL CORP), 9 September 1994 (1994-09-09)
- BERNTSON G: 'MOBITEX - A NEW NETWORK FOR MOBILE DATA COMMUNICATIONS' ERICSSON REVIEW (INCL. ON) vol. 66, no. 1, January 1989, STOCKHOLM, SE, pages 33 - 39, XP000038756

## Description

### BACKGROUND OF THE INVENTION

This invention generally relates to a system for requesting roadside assistance from a vehicle at any location. More specifically, this invention relates to a method for providing a textual description of the remote location of a vehicle where roadside assistance is required.

Systems are currently in use that allow a driver of a vehicle to request roadside assistance such as medical, police, or vehicle repair services. Current systems operate in the following general manner. The vehicle driver initiates a request through an on-board device that generates a signal, which is propagated through cellular communications, indicating that roadside assistance is needed. The vehicle location is determined through a global positioning system, for example. An operator then receives the vehicle location information from the global positioning system along with an indication that there has been a request for assistance. The operator then places a phone call to the driver of the vehicle to determine the location of the vehicle more precisely and to determine exactly what assistance may be needed. In most instances, however, the information given by the driver is inaccurate and unreliable. For those occasions where the driver of the vehicle is unable to provide specific location information, the operator is provided with a map showing the area within the vicinity of the vehicle.

Although existing systems may be useful, they have several shortcomings and drawbacks. For example, there is a need for a system that automatically provides more precise vehicle location information. There is also a need for a system that automatically provides adequate information to an operator and the service being dispatched, without requiring communication directly with the driver of a vehicle over a cellular network. Further, it is desirable to have a system that simplifies the task of an operator in dispatching the requested service provider.

Dingus T A: 'Human Factors Engineering the Travtek Driver Interface' Proceedings of the Vehicle Navigation and Information Systems Conference, Dearborn, Oct. 20 - 23, 1991, New York, IEEE, US, vol. 2, 20 October 1991 (1991-10-20), pages 749 755, XP000357146 ISBN: 0-7803-0488-8, relates to providing an information-rich multifunction environment for a driver, necessitating extensive teamwork in human factors engineering the displays and controls for efficient and safe operation.

US-A-5,508,931 relates to a route guidance on/off-route state filter for improved tracking of vehicle position with respect to a preselected route.

US-A-5,625,668 relates to a position reporting cellular telephone system comprising a combination of a global positioning system (GPS) receiver and cellular transceiver and a data processing facility for converting latitude, longitude, velocity and bearing information provided by the GPS receiver into meaningful descriptors that are spoken with a speech synthesiser back to the cellular transceiver or an outsider who calls in an enquiry to a '1-900' service.

US-A-5,572;204 relates to a vehicle emergency message system which can request emergency or roadside assistance from a response centre by activating a button in the vehicle. GPS is used to continuously store the vehicle location. A cellular telephone network is used to contact a response centre and transfer a data string via modem containing information to assist the response centre in acting on the request. If the first attempt to contact the response centre at a phone number for receiving a data transfer is unsuccessful, a second call is made to a different number by passing the data transfer and immediately placing the cellular phone into an unmuted condition. This allows the user to hear and interact with a cellular operator, if necessary, prior to being connected to the response centre.

The invention provides a method that avoids the shortcomings and drawbacks of the methods described above. A method designed according to this invention activates a vehicle assistance request upon the push of a single button. Upon activation, the location of the vehicle and the type of emergency service requested is transmitted through a mobile date communications network to a dedicated monitoring center for handling such requests. Once a request signal is received at the monitoring center, vehicle coordinates, which are determined through a global positioning system, are converted to the closest street address and nearest intersections to the vehicle location. After the vehicle location, vehicle identification, subscriber information and the type of emergency service requested is determined, an operator dispatches the appropriate service provider. Importantly, the vehicle location information is provided in a textual format that is readily interpreted and eliminates the guesswork that typically accompanies map reading, which increases the speed and accuracy with which the requested service is provided to the vehicle driver.

### SUMMARY OF THE INVENTION

According to a first aspect of the present invention there is provided a method of providing information regarding the location of a remotely located vehicle, a method according to claim 1. location coordinates has a corresponding direction of travel and speed that are consistent with the travel information regarding the vehicle. In the event that no such street is found, a determination is made whether any street within the selected distance from the vehicle coordinates has a direction of travel that corresponds to the direction of travel of the vehicle. In the event that no such streets are found, the system finds the street nearest to the vehicle location coordinates.

In one embodiment, only the vehicle location coordinates are provided (such as when the vehicle is not moving) and the street where the vehicle is located is determined by finding the street nearest to the location coordinates.

The various features and advantages of this invention will become apparent to those skilled in the art from the following detailed description of the presently preferred embodiment. The drawings that accompany the detailed description can be described as follows.

### BRIEF DESCRIPTION OF THE DRAWINGS

Figure 1 is a schematic illustration of a vehicle assistance request system.
Figure 2 is a chart illustrating the preferred textual information generated by a system designed according to this invention.
Figure 3 is a flow chart diagram illustrating the methodology associated with this invention.
Figure 4 is a block diagram schematically illustrating the configuration of a system designed according to this invention.

### DETAILED DESCRIPTION OF THE PREFERRED EMBODIMENT

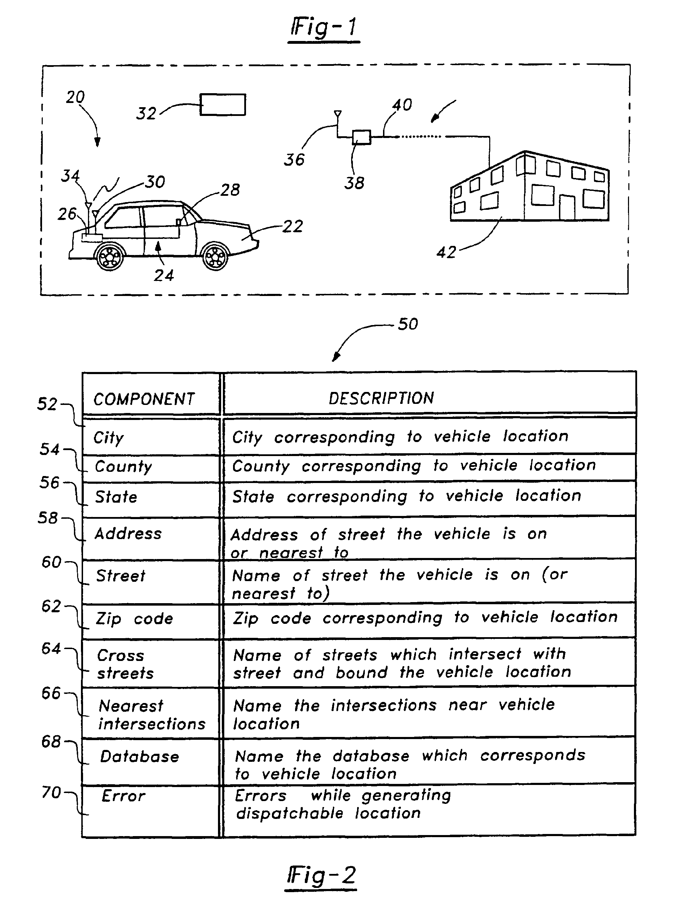

Figure 1 schematically illustrates a vehicle roadside assistance request system or emergency response network 20. A vehicle 22 includes an on-board assistance request system 24. The request system 24 includes a controller unit 26 and an operator interface module 28. The operator interface module 28 preferably is located within the passenger compartment of the vehicle such that it is easily accessed by the driver of the vehicle. The control unit 26 includes a computer that handles all signal processing at the vehicle location.

An antenna 30 facilitates communication between the system 24 and a global positioning network 32. A variety of global positioning technologies are available and operative, and can be accessed by a system designed according to this invention as will be understood by those skilled in the art. State of the art global positioning system technologies generally have excellent availability and location accuracy capabilities. Typical global positioning systems can provide vehicle location information to an accuracy within 100 meters of the actual location 95 % of the time and within 300 meters 100 % of the time. Vehicle location typically is determined within 40 meters of the actual location. A system designed according to this invention preferably includes averaging and screening algorithms that utilize and enhance the raw global positioning system data.

Another antenna 34 is utilized to transmit a data communications signal, which preferably is in a Mobitex format, to a remotely located antenna 36 that is coupled to a Mobitex tower 38. The Mobitex tower 38 is connected through dedicated transmission lines 40 to a request monitoring center 42. The request monitoring center 42 includes appropriate devices for facilitating the handling of various service requests and enabling operators to dispatch the appropriate roadside service.

In a system designed according to this invention, when a vehicle roadside assistance request is generated, the information provided to the request monitoring center 42 includes the vehicle location coordinates, such as the longitude and latitude of the vehicle placement. Also provided are the vehicle direction and speed of travel. In instances where the vehicle is not moving, only the location coordinates will be provided. A system designed according to this invention then converts that information into a textual description of the vehicle location.

Figure 2 contains a chart 50 illustrating the various items within the preferred textual description provided by this invention. Most preferably, complete addressing information (items 52 through 62) is provided. Further, the cross streets 64 that intersect with the street where the vehicle is located, are also determined and provided in the written description. The cross streets that are listed preferably are those that bound the vehicle location. For example, when the vehicle is on a street that runs east and west the nearest cross street to the east of the vehicle and the nearest cross street to the west of the vehicle are provided.

In some instances, the street where the vehicle is located will not necessarily be named or the name of the street may be unknown. In such instances, the nearest intersections to the vehicle location are provided at 66. With a written description of the nearest intersections and the other information regarding the vehicle, the requested service can be more readily provided.

The textual description of the vehicle location preferably is supplemented with an identifier of the database 68 from which the information is gathered and any error messages 70, which describe any errors encountered in generating the textual description from the vehicle placement and travel information.

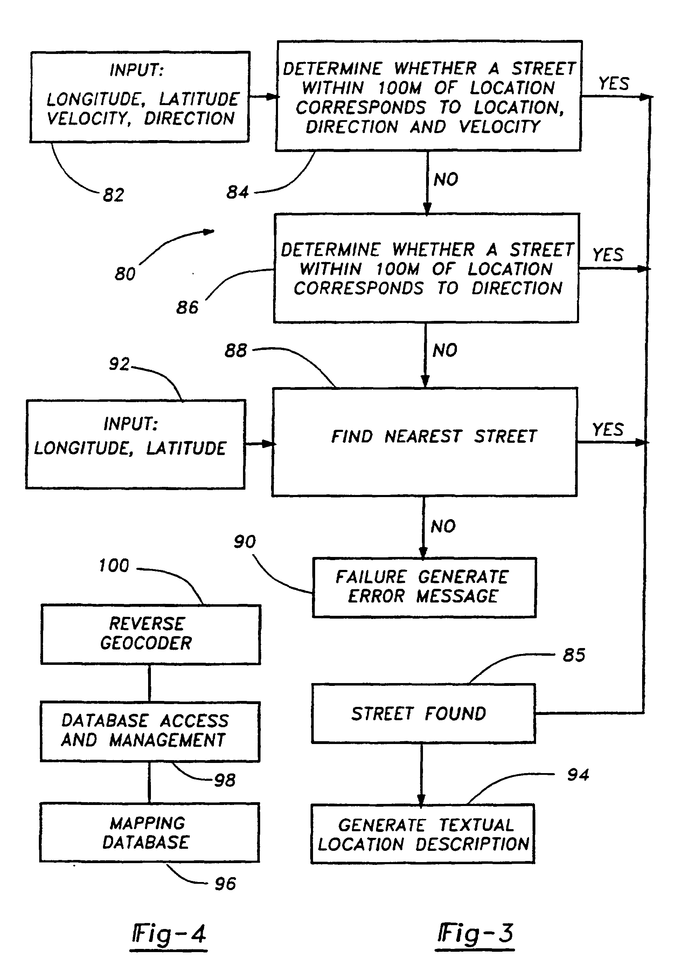

A main concern in providing a written description of the vehicle location is determining the street where the vehicle is located. Figure 3 illustrates, through a flow chart diagram 80, the preferred methodology for determining the street where the vehicle is located. When the input 82 includes the longitudinal and latitudinal placement of the vehicle and the speed and direction of travel information, a three step analysis preferably is performed. First, as shown at 84, an attempt to locate the street is performed by considering streets within 100 meters of the location coordinates of the vehicle. The preferred range is 100 meters, however, any useful range could be selected. Any street within that range having direction and speed information is compared with the speed and direction information regarding the vehicle. For example, if it is known that the vehicle is traveling west, those streets that allow for travel in a west direction are selected as possible candidates. The speed limits of those possible candidates are utilized to determine a speed range, which is based upon street class information within the preferred database, that is compared to the speed of the vehicle. The system preferably recognizes a range of speeds that reaches above and below a given street's limit. In other words, the vehicle speed need not exactly match a given speed limit. If there is a match of a street within 100 meters of the location of the vehicle that also matches the direction and speed of the vehicle, the decision is made that the street has been found at 85.

If no match is found for all three variables at 84, then an attempt to find the street is performed at 86. Streets within 100 meters of the vehicle location coordinates are chosen and direction information regarding those streets is utilized to find a match. If any street that is within 100 meters of the location coordinates has a direction of travel that corresponds to the direction of travel of the vehicle, then the street is considered found at 85.

In the event that no street within 100 meters of the location coordinates of the vehicle has a direction that corresponds to the direction of travel of the vehicle, an attempt is made to find the nearest street at 88. This preferably is accomplished by choosing the street closest to the actual coordinates. If such a street exists, then the street is considered found at 85.

In the event that no street is found that matches the input data from 82, then a failure or error message is generated at 90 indicating that the vehicle location has not been accurately obtained. Under such circumstances, a computer generated map of the area surrounding the vehicle location coordinates can be provided to assist the operator and the service provider.

Alternatively, the input regarding the vehicle location can consist only of the longitude and latitude location coordinates. When the input 92 has only placement information, then an attempt is made to find the nearest street at 88. If there is a match, then the street is considered found at 85.

Once the street is found at 85, then the system proceeds to generate a textual location description at 94.

Figure 4 illustrates, in block diagram form, the general software structure of a system designed according to this invention. A mapping database 96 is accessed through an access and management module 98 by a reverse geocoder module 100. The reverse geocoder module 100 is the driving force behind converting the vehicle location coordinates into a textual description of the vehicle's location. The presently preferred mapping database is a digital spacial database that is commercially available from ETAK Corporation, which is located in Menlo Park, California. The preferred access and management module is also commercially available from ETAK and is known as their application programmer's interface. Those skilled in the art will be able to develop the specific code necessary to implement the reverse geocoder module, given this specification.

Once the street is located, the system performs a similar analysis in order to determine, as closely as possible, an address where the vehicle is located. The availability of address information will depend upon the mapping database that is chosen.

In addition to the street and address information, the preferred textual description also provides cross streets or the intersections nearest to the vehicle. In the event that the street name is known, cross streets are typically also identifiable by name. Most preferably, the cross streets that are provided are those that bound the vehicle location. Cross streets can be located by searching through the database for the nearest streets intersecting the street where the vehicle is located. This preferably is accomplished by beginning at the vehicle location and moving along the street where the vehicle is located until a cross street is found. This is performed in opposite directions in order to provide a cross street on each side of the vehicle location. The system also most preferably provides information indicating the distance between the vehicle and the cross streets and the orientation of the vehicle with respect to those streets.

In the event that the street where the vehicle is located is not named or the name of the street is unknown, given the information from the database, then the nearest intersections of streets with known names are provided. These intersections are located preferably in a manner similar to that just described regarding cross street location.

As can be seen, a system implementing the method of this invention provides significant advantages. The textual description of vehicle location provides more accurate and more readily interpreted data. System operators and service providers can more easily find the vehicle where assistance is required. Operators need not be concerned about inaccurate guesswork in interpreting a computer-generated map. Further, operators can handle more incoming requests because they can devote significantly less time to guiding a service provider to the vehicle location.

The preceding description is exemplary rather than limiting in nature. Variations and modifications to the disclosed embodiment will become apparent to those skilled in the art that do not necessarily depart from the spirit and scope of this invention. Accordingly, the following claims must be studied in order to determine the legal scope given to this invention.

## Claims

1. A method of providing information regarding the location of a remotely located vehicle, comprising the steps:
(a) generating an assistance request signal from the vehicle by using a single button in a one-step operation, said assistance request signal being transmitted through a mobile data communications network;
(b) receiving the assistance request signal at a second location, remote from the vehicle;
(c) determining a longitudinal placement of the vehicle using a global positioning system;
(d) determining a latitudinal placement of the vehicle using a global positioning system;
(e) determining a speed of travel of the vehicle;
(f) determining a direction of travel of the vehicle;
(g) generating a textual description of the vehicle location using the placement and travel information from steps (c) through (f) and providing the textual description at the second location in response to said step (a), the textual description listing a street on which the vehicle is located and describing the vehicle location textually; and
(h) at the second location, dispatching assistance to the vehicle location based upon the textual description;
wherein the textual description of the vehicle location further includes at least one street that intersects with the street where the vehicle is located and wherein step (g) is performed by the substeps of determining the street where the vehicle is located and determining whether any known street has a portion that intersects with the street where the vehicle is located by searching along the street where the vehicle is located from the vehicle location in a direction corresponding to the vehicle direction of travel until an intersecting street is found.

2. The method of claim 1, wherein steps (e) and (f) are performed using a global positioning system.

3. The method of claim 1, wherein the vehicle location is determined by the substeps of determining whether a portion of any known street is within a preselected distance from the longitudinal and latitudinal placement of the vehicle and placing such streets within a first possible street set; and
determining whether any street within the first possible street set has a specified direction that corresponds to the direction of travel of the vehicle and placing such streets within a second possible street set.

4. The method of claim 3, wherein the vehicle location is determined by the further substeps of determining whether any street within the second possible street set has an associated speed range that corresponds to the speed of travel of the vehicle and placing such streets within a third possible street set; and
determining which street from within the third possible street set is closest to the placement of the vehicle and defining the street where the vehicle is located as the closest street from within the third possible street set.

5. The method of claim 4, wherein the third possible street set contains no streets and wherein the vehicle location is determined by the further substeps of determining which street from within the second possible street set is closest to the placement of the vehicle and defining the street where the vehicle is located as the closest street from within the second possible street set.

6. The method of claim 4, wherein the third possible street set contains no streets, the second possible street set contains no streets and wherein the vehicle location is determined by determining which street from within the first possible street set is closest to the vehicle location and defining the street where the vehicle is located as the closest street from within the first possible street set.

7. The method of claim 4, wherein the first possible street set contains no streets and the vehicle location is determined by the further substep of determining which known street is closest to the placement of the vehicle and defining the street where the vehicle is localed as the closest street.

8. The method of claim 3, wherein the vehicle location is determined by the further substeps of determining which street from within the second possible street set is closest to the placement of the vehicle and defining the street where the vehicle is located as the closest street from within the second possible street set.

9. The method of claim 3, wherein the preselected distance is 100 metres.

10. The method of claim 1, wherein two intersecting streets are included in the textual description and a second intersecting street is determined by searching along the street where the vehicle is located from the vehicle location in a direction opposite from the vehicle location in a direction opposite from the vehicle direction of travel until the second intersecting street is found, such that the vehicle is located between the two intersecting streets.

11. The method of claim 10, wherein the textual description includes an approximate distance between the vehicle and the first and second intersecting streets, respectively and an orientation of the vehicle relative to the first and second intersecting streets.

12. The method of claim 10, wherein the vehicle location is determined using a digital mapping database.

13. The method of claim 1, wherein the textual description further includes a street address that is near the vehicle on the street where the vehicle is located, a name of a city, a name of a county and a name of a state where the vehicle is located.

14. The method of claim 1 further including the step of determining a street address to which the vehicle is closest, wherein the textual description indicates the street address.

15. The method of claim 1 further including the step of determining the street on which the vehicle is located automatically by a computer.

16. The method of claim 1 wherein the textual description can be read to dispatch assistance and indicate the location of the vehicle.

17. The method of claim 1, wherein the vehicle location is determined by:
(i) determining whether a known street is within a preselected distance from the longitudinal and latitudinal placement of the vehicle and determining the street within the preselected distance that is closest to the placement of the vehicle, said step (i) being performed automatically by a computer.

18. The method of claim 17, **characterised by** the further step of determining whether a known street is within a second preselected distance from the vehicle placement and has a direction of permissible travel and a permissible range of speed of travel that correspond to the direction and speed of travel of the vehicle.

19. The method of claim 18, wherein no streets within the second preselected distance from the vehicle placement has a permissible range of speed that corresponds to the direction and speed of travel of the vehicle and wherein the closest street is determined by determining whether a known street from within the second preselected distance has a direction of permissible travel that corresponds to the direction of travel of the vehicle.

## Patentansprüche

1. Verfahren zum Bereitstellen von Informationen betreffend den Standort eines entfernt befindlichen Fahrzeugs, die folgenden Schritte umfassend:
(a) Erzeugen eines Hilfc-Anfordcrungssignals von dem Fahrzeug unter Verwendung einer einzelnen Taste in einer Ein-Schritt-Operation, wobei das Hilfe-AnPorderungssignal durch ein Mobildatenkommunikationsnetz übertragen wird;
(b) Empfangen des Hilfe-Anforderungssignals an einem zweiten Standort, entfernt von dem Fahrzeug;
(c) Bestimmen einer Längenlage des Fahrzeugs unter Verwendung eines globalen Positionierungssystems;
(d) Bestimmen einer Breitenlage des Fahrzeugs unter Verwendung eines globalen Positionicrungssystems;
(e) Bestimmen einer Fahrgeschwindigkeit des Fahrzeugs;
(f) Bestimmen einer Fahrtrichtung des Fahrzeugs;
(g) Erzeugen einer textlichen Beschreibung des Fahrzeugstandorts unter Verwendung der Lagen- und Fahrtinformationen aus den Schritten (c) bis (f) und Bereitstellen der textlichen Beschreibung an dem zweiten Standort als Reaktion auf den Schritt (a), wobei die textliche Beschreibung eine Straße auflistet, in der sich das Fahrzeug befindet, und den Fahrzeugstandort textlich beschreibt; und
(h) an dem zweiten Standort Senden von Hilfe zu dem Fahrzeugstandort basierend auf der textlichen Beschreibung;
wobei die textliche Beschreibung des Fahrzeugstandorts weiter mindestens eine Straße enthält, die die Straße kreuzt, in der sich das Fahrzeug befindet, und wobei Schritt (g) durch die Unterschritte der Bestimmung der Straße durchgeführt wird, in der sich das Fahrzeug befindet, und der Bestimmung, ob eine bekannte Straße einen Teil hat, der die Straße kreuzt, in der sich das Fahrzeug befindet, durch Suchen entlang der Straße, in der sich das Fahrzeug befindet, von dem Fahrzeugstandort in einer Richtung, die mit der Fahrtrichtung des Fahrzeugs korrespondiert, bis eine kreuzende Straße gefunden wird.

2. Verfahren von Anspruch 1, wobei die Schritte (e) und (f) unter Verwendung eines globalen Positionierungssystems durchgeführt werden.

3. Verfahren von Anspruch 1, wobei der Fahrzeugstandort durch die Unterschritte der Bestimmung bestimmt wird, ob ein Teil einer bekannten Straße sich innerhalb einer vorgewählten Distanz von der Längen- und Breitenlage des Fahrzeugs befindet, und Einsetzen derartiger Straßen in eine erste mögliche Straßenmenge; und
der Bestimmung, ob eine Straße in der ersten möglichen Straßenmenge eine spezifizierte Richtung hat, die mit der Fahrtrichtung des Fahrzeugs korrespondiert, und Einsetzen derartiger Straßen in eine zweite mögliche Straßenmenge.

4. Verfahren von Anspruch 3, wobei der Fahrzeugstandort durch die weiteren Unterschritte der Bestimmung bestimmt wird, ob eine Straße in der zweiten möglichen Straßenmenge einen assoziierten Gescliwindigkeitsbereich hat, der mit der Fahrgeschwindigkeit des Fahrzeugs korrespondiert, und Einsetzen derartiger Straßen in eine dritte mögliche Straßenmenge; und der Bestimmung, welche Straße von innerhalb der dritten möglichen Straßenmenge aus am nächsten zu der Lage des Fahrzeugs ist, und der Definition der Straße, in der sich das Fahrzeug befindet, als die nächste Straße von innerhalb der dritten möglichen Straßenmenge aus.

5. Verfahren von Anspruch 4, wobei die dritte mögliche Straßenmenge keine Straßen enthält und wobei der Fahrzeugstandort durch die weiteren Unterschritte der Bestimmung bestimmt wird, welche Straße von innerhalb der zweiten möglichen Straßenmenge aus am nächsten zu der Lage des Fahrzeugs ist, und der Definition der Straße, in der sich das Fahrzeug befindet, als die nächste Straße von innerhalb der zweiten möglichen Straßenmenge aus.

6. Verfahren von Anspruch 4, wobei die dritte mögliche Straßenmenge keine Straßen enthält, die zweite mögliche Straßenmenge keine Straßen enthält und wobei der Fahrzeugstandort durch die Bestimmung bestimmt wird, welche Straße von innerhalb der ersten möglichen Straßenmenge aus am nächsten zu dem Fahrzeugstandort ist, und der Definition der Straße, in der sich das Fahrzeug befindet, als die nächste Straße von innerhalb der ersten möglichen Straßenmenge aus.

7. Verfahren von Anspruch 4, wobei die erste mögliche Straßenmenge keine Straßen enthält und der Fahrzeugstandort durch den weiteren Unterschritt der Bestimmung bestimmt wird, welche bekannte Straße am nächsten zu der Lage des Fahrzeugs ist, und der Definition der Straße, in der sich das Fahrzeug befindet, als die nächste Straße.

8. Verfahren von Anspruch 3, wobei der Fahrzeugstandort durch die weiteren Unterschritte der Bestimmung bestimmt wird, welche Straße von innerhalb der zweiten möglichen Straßenmenge aus am nächsten zu der Lage des Fahrzeugs ist, und der Definition der Straße, in der sich das Fahrzeug befindet, als die nächste Straße von innerhalb der zweiten möglichen Straßenmenge aus.

9. Verfahren von Anspruch 3, wobei die vorgewählte Distanz 100 Meter beträgt.

10. Verfahren von Anspruch 1, wobei zwei sich kreuzende Straßen in der textlichen Beschreibung enthalten sind, und eine zweite kreuzende Straße durch Suchen entlang der Straße bestimmt wird, in der sich das Fahrzeug befindet, von dem Fahrzeugstandort in einer Richtung entgegengesetzt zu der Fahrtrichtung des Fahrzeugs, bis die zweite kreuzende Straße gefunden wird, derart, dass das Fahrzeug sich zwischen den zwei kreuzenden Straßen befindet.

11. Verfahren von Anspruch 10, wobei die textliche Beschreibung eine ungefähre Distanz zwischen dem Fahrzeug und der ersten bzw. zweiten kreuzenden Straße und eine Orientierung des Fahrzeugs relativ zu der ersten und zweiten kreuzenden Straße enthält.

12. Verfahren von Anspruch 10, wobei der Fahrzeugstandort unter Verwendung einer digitalen Abbildungs-Datenbank bestimmt wird.

13. Verfahren von Anspruch 1, wobei die textliche Beschreibung weiter eine Straßenadresse enthält, die nahe dem Fahrzeug ist, in der Straße, in der sich das Fahrzeug befindet, einen Namen einer Stadt, einen Namen eines Verwaltungsbezirks und einen Namen eines Staats, in denen sich das Fahrzeug befindet.

14. Verfahren von Anspruch 1, weiter enthaltend den Schritt der Bestimmung einer Straßenadresse, zu der das Fahrzeug am nächsten ist, wobei die textliche Beschreibung die Straßenadresse angibt.

15. Verfahren von Anspruch 1, weiter enthaltend den Schritt der automatischen Bestimmung der Straße, in der sich das Fahrzeug befindet, durch einen Computer.

16. Verfahren von Anspruch 1, wobei die textliche Beschreibung gelesen werden kann, um Hilfe zu senden und den Standort des Fahrzeugs anzugeben.

17. Verfahren von Anspruch 1, wobei der Fahrzeugstandort bestimmt wird durch
(i) Bestimmung, ob eine bekannte Straße innerhalb einer vorgewählten Distanz von der Längen- und Breitenlage des Fahrzeugs vorhanden ist, und Bestimmung der Straße innerhalb der vorgewählten Distanz, die am nächsten zu der Lage des Fahrzeugs ist, wobei der Schritt (i) automatisch durch einen Computer durchgeführt wird.

18. Verfahren von Anspruch 17, **gekennzeichnet durch** den weiteren Schritt der Bestimmung, ob eine bekannte Straße innerhalb einer zweiten vorgewählten Distanz von der Fahrzeuglage vorhanden ist und eine Richtung der zulässigen Bewegung und einen zulässigen Geschwindigkeitsbereich der Bewegung hat, die mit der Fahrtrichtung und Fahrgeschwindigkeit des Fahrzeugs korrespondieren.

19. Verfahren von Anspruch 18, wobei keine Straße innerhalb der zweiten vorgewählten Distanz von der Fahrzeuglage einen zulässigen Geschwindigkeitsbereich hat, der mit der Fahrtrichtung und Fahrgeschwindigkeit des Fahrzeugs korrespondiert, und wobei die nächste Straße durch die Bestimmung bestimmt wird, ob eine bekannte Straße von innerhalb der zweiten vorgewählten Distanz aus eine Richtung der zulässigen Bewegung hat, die mit der Fahrtrichtung des Fahrzeugs korrespondiert.

## Revendications

1. Procédé de fourniture d'une information concernant la localisation d'un véhicule localisé à distance, comprenant les étapes de :
(a) génération d'un signal de requête d'assistance depuis le véhicule en utilisant un unique bouton selon une opération mono-étape, ledit signal de requête d'assistance étant transmis par l'intermédiaire d'un réseau de communication de données mobile ;
(b) réception du signal de requête d'assistance en une seconde localisation à distance du véhicule ;
(c) détermination d'un positionnement longitudinal du véhicule en utilisant un système de positionnement global ;
(d) détermination d'un positionnement latitudinal du véhicule en utilisant un système de positionnement global ;
(e) détermination d'une vitesse de déplacement du véhicule ;
(f) détermination d'une direction de déplacement du véhicule ;
(g) génération d'une description textuelle de la localisation de véhicule en utilisant l'information de positionnement et de déplacement en provenance des étapes (c) à (f) et fourniture de la description textuelle au niveau de la seconde localisation en réponse à ladite étape (a), la description textuelle listant une rue sur laquelle le véhicule est localisé et décrivant la localisation de véhicule textuellement ; et
(h) au niveau de la seconde localisation, distribution de l'assistance sur la localisation de véhicule sur la base de la description textuelle,
dans lequel la description textuelle de la localisation de véhicule inclut en outre au moins une rue qui intersecte la rue au niveau de laquelle le véhicule est localisé et dans lequel l'étape (g) est réalisée au moyen des sous-étapes de détermination de la rue au niveau de laquelle le véhicule est localisé et de détermination de si oui ou non une quelconque rue connue comporte une partie qui intersecte la rue au niveau de laquelle le véhicule est localisé en effectuant une recherche le long de la rue au niveau de laquelle le véhicule est localisé depuis la localisation de véhicule suivant une direction qui correspond à la direction de déplacement de véhicule jusqu'à ce qu'une rue d'intersection soit trouvée.

2. Procédé selon la revendication 1, dans lequel les étapes (e) et (f) sont réalisées en utilisant un système de positionnement global.

3. Procédé selon la revendication 1, dans lequel la localisation de véhicule est déterminée au moyen des sous-étapes de :
détermination de si oui ou non une partie d'une quelconque rue connue est à l'intérieur d'une distance présélectionnée à partir des positionnements longitudinal et latitudinal du véhicule et placement de ces rues à l'intérieur d'un premier jeu de rues possible ; et
détermination de si oui ou non une quelconque rue à l'intérieur du premier jeu de rues possible présente une direction spécifiée qui correspond à la direction de déplacement du véhicule et placement de ces rues à l'intérieur d'un second jeu de rues possible.

4. Procédé selon la revendication 3, dans lequel la localisation de véhicule est déterminée au moyen des sous-étapes supplémentaires de :
détermination de si oui ou non une quelconque rue à l'intérieur du second jeu de rues possible présente une plage de vitesses associée qui correspond à la vitesse de déplacement du véhicule et placement de ces rues en provenance de l'intérieur d'un troisième jeu de rues possible ; et
détermination de quelle rue prise parmi le troisième jeu de rues possible est la plus proche du positionnement du véhicule et définition de la rue au niveau de laquelle le véhicule est localisé en tant que rue la plus proche en provenance de l'intérieur du troisième jeu de rues possible.

5. Procédé selon la revendication 4, dans lequel le troisième jeu de rues possible ne contient pas de rues et dans lequel la localisation de véhicule est déterminée au moyen des sous-étapes supplémentaires de détermination de quelle rue en provenance de l'intérieur du second jeu de rues possible est la plus proche du positionnement du véhicule et définition de la rue au niveau de laquelle le véhicule est localisé en tant que rue la plus proche en provenance de l'intérieur du second jeu de rues possible.

6. Procédé selon la revendication 4, dans lequel le troisième jeu de rues possible ne contient pas de rues, le second jeu de rues possible ne contient pas de rues et dans lequel la localisation de véhicule est déterminée en déterminant quelle rue en provenance de l'intérieur du premier jeu de rues possible est la plus proche de la localisation de véhicule et en définissant la rue au niveau de laquelle le véhicule est localisé en tant que rue la plus proche en provenance de l'intérieur du premier jeu de rues possible.

7. Procédé selon la revendication 4, dans lequel le premier jeu de rues possible ne contient pas de rues et la localisation de véhicule est déterminée au moyen de l'étape supplémentaire de détermination de quelle rue connue est la plus proche du positionnement du véhicule et de définition de la rue au niveau de laquelle le véhicule est localisé en tant que rue la plus proche.

8. Procédé selon la revendication 3, dans lequel la localisation de véhicule est déterminée au moyen des sous-étapes supplémentaires de détermination de quelle rue en provenance de l'intérieur du second jeu de rues possible est la plus proche du positionnement du véhicule et de définition de la rue au niveau de laquelle le véhicule est localisé en tant que rue la plus proche en provenance de l'intérieur du second jeu de rues possible.

9. Procédé selon la revendication 3. dans lequel la distance présélectionnée est de 100 mètres.

10. Procédé selon la revendication 1, dans lequel deux rues en intersection sont incluses dans la description textuelle et une seconde rue d'intersection est déterminée en effectuant une recherche le long de la rue au niveau de laquelle le véhicule est localisé depuis la localisation de véhicule suivant une direction opposée à la localisation de véhicule suivant une direction opposée à la direction de déplacement de véhicule jusqu'à ce que la seconde rue d'intersection soit trouvée de telle sorte que le véhicule soit localisé entre les deux rues d'intersection.

11. Procédé selon la revendication 10, dans lequel la description textuelle inclut une distance approchée entre le véhicule et les première et seconde rues d'intersection, de façon respective, et une orientation du véhicule par rapport aux première et seconde rues d'intersection.

12. Procédé selon la revendication 10, dans lequel la localisation de véhicule est déterminée en utilisant une base de données de cartographie numérique.

13. Procédé selon la revendication 1, dans lequel la description textuelle inclut en outre une adresse de rue qui est proche du véhicule sur la rue au niveau de laquelle le véhicule est localisé, un nom d'une ville, un nom d'un conté et un nom d'un état où le véhicule est localisé.

14. Procédé selon la revendication 1, incluant en outre l'étape de détermination d'une adresse de rue vis-à-vis de laquelle le véhicule est le plus proche où la description textuelle indique l'adresse de rue.

15. Procédé selon la revendication 1, incluant en outre l'étape de détermination de la rue sur laquelle le véhicule est localisé de manière automatique au moyen d'un ordinateur.

16. Procédé selon la revendication 1, dans lequel la description textuelle peut être lue pour distribuer l'assistance et pour indiquer la localisation du véhicule.

17. Procédé selon la revendication 1, dans lequel la localisation de véhicule est déterminée :
(i) en déterminant si oui ou non une rue connue est à l'intérieur d'une distance présélectionnée à partir des positionnements longitudinal et latitudinal du véhicule et en déterminant la rue à l'intérieur de la distance présélectionnée qui est la plus proche du positionnement du véhicule, ladite étape (i) étant réalisée de manière automatique par un ordinateur.

18. Procédé selon la revendication 17, **caractérisé par** l'étape supplémentaire de détermination de si oui ou non une rue connue est à l'intérieur d'une seconde distance présélectionnée à partir du positionnement de véhicule et présente une direction de déplacement autorisé et une plage de vitesses de déplacement autorisés qui correspondent à la direction et à la vitesse de déplacement du véhicule.

19. Procédé selon la revendication 18, dans lequel aucune rue à l'intérieur de la seconde distance présélectionnée à partir du positionnement de véhicule ne présente une plage de vitesse autorisée qui correspond à la direction et à la vitesse de déplacement du véhicule et dans lequel la rue la plus proche est déterminée en déterminant si oui ou non une rue connue depuis l'intérieur de la seconde distance présélectionnée présente une direction de déplacement autorisé qui correspond à la direction de déplacement du véhicule.
